# EUROPÄISCHE PATENTANMELDUNG

(11) **EP 0 528 062 A1**
(43) Veröffentlichungstag der Anmeldung: **24.02.1993**
(21) Anmeldenummer: 91113751.1
(22) Anmeldetag: 16.08.1991
(51) Int. Cl.: B23K 7/00, B22D 11/126

(54) **Verfahren zum schnellen Trennen von Dünnbrammensträngen**

(71) Anmelder: HORST K. LOTZ Feuerschutzbaustoffe, D-65719 Hofheim (DE)
(72) Erfinder: Lotz, Horst K., W-6238 Hofheim-Wallau (DE); Lotz, Mattias, W-6200 Wiesbaden-Delkenheim (DE)

(57) **Zusammenfassung**

Durch die Kombination von Schneiden mit mehreren Brennern an einem Ausleger gleichzeitig und dabei mit dem Einsatz eines sehr schnellen Flachschneidverfahrens vielleicht zusammen mit der Einführung eines an sich zeitnachteiligen Lochbohrens mit einem schwachen aber zunehmenden Gasstrahl anstatt Lochstechens mit einem scharfen Gasstrahl wird ein Verfahren zum schnellen Trennen von dünnen Werkstücken wie z. B. Dünnbrammen erzeugt, bei dem eine Reihenfolge von Anheizen, Lochbohren, evtl. drehendem Einschneiden, Schneiden oder besonders schnellem Durchschneiden mit mehreren Brennern gleichzeitig wirtschaftlich und sicher durchgeführt werden kann.

## Beschreibung

Die Erzeugung von dünnen 10 - 100 mm dicken Strängen, die mit hohen Geschwindigkeiten z. B. 4 - 10 m/Min oder mehr entsprechenden Stahl-Stranggießanlagen austreten bedingt für die nachfolgende Weiterverarbeitung ein Trennverfahren, das den Gießgeschwindigkeiten bei entsprechender Strangbreite entspricht. Das bisher beim Stranggießen vorzugsweise eingesetzte Schneidverfahren mit Sauerstoff erlaubt zwar durch die geringere Materialdicke eine wesentlich höhere Schneidgeschwindigkeit, aber auch 800 mm/Min. bei 6 m/Min. Gießgeschwindigkeit bei etwa 50 mm Strangdicke und Schneiden mit 2 Brennern, beide von außen her, ergibt immer noch Schneidzeiten von ca. 81 Sek einschließlich Nebenzeiten bei einem 1600 mm breiten Dünnbrammenstrang, was einem Mitlaufweg von ca. 8,1 m entspricht. Das Rückführen der Brennschneidmaschine mit ca. 16 m/Min. im Mittel ergibt eine Länge des kürzesten Strangstückes von etwa 12,0 m. Bei zunehmenden Strangbreiten und Stranggeschwindigkeiten sind bereits weitere, nachgeschaltete Trenneinrichtungen zum weiteren Unterteilen erforderlich. Hinzu kommt, daß herkömmliche mit 2 Brennern gegeneinanderschneidende Strangbrennschneidmaschinen schwer, also hier ungünstig für den Synchronlauf sind und entsprechend hoch und breit bezogen auf den Strang sind; zudem soll dieser oder die Teilstücke durch Isolierhauben möglichst heiß gehalten werden.

Neben den rein mechanischen Trenneinrichtungen, die zwar schnell arbeiten aber teuer und umständlich im Einsatz sind, gibt es zwei verschiedene Arten, das autogene Brennschneiden für solche Anwendung schneller zu machen. Zum einen ist dies die Anordnung von mehreren Brennern, die an einem niedrigbauenden Ausleger wirtschaftlich von nur einem Ausleger durch einen Längsschlitz in der Strangisolierhaube über den Strang geführt werden. Dieses bedingt jedoch ein schnelles, gleichzeitiges, an sich bekanntes Lochstechen mit Sauerstoff, was zwar durchaus in Betracht kommt, in der Praxis jedoch durch heftiges Hochspritzen von Funken und Schlacketeilchen zum häufigen Verspritzen der Schneiddüsen und bei einem länger anhaltenden Betrieb zu sehr häufigen Ausfällen führt. Selbst der Einsatz von Eisenpulver als Zündhilfe, nebenbei ein an sich wartungsintensives und zusätzliche Kosten erforderndes Verfahren, kann dieses unerwünschte Zurückspritzen auch bei geeigneten Brennerstellungen und -bewegungen zur Spritzrichtungsvorgabe nicht ausreichend sicher verhindern. Oberflächenunregelmäßigkeiten und vor allem Zunderteilchen oder -plättchen auf den Strängen verlagern eigengesetzlich die jeweilige Zündstelle und führen damit die Rückspritzstörungen herbei.

Zum anderen können mit einem sehr flach ca. 10 - 15° oder weniger zum dünnen Werkstück geneigten Brenner für einen starken Schneidstrahl aus Sauerstoff Schneidgeschwindigkeiten von 1, 2 und mehr m/Min erzielt werden. Ein direktes Gegeneinanderschneiden ist wegen der gegenseitigen Beeinflussung der Schneidstrahle unter dem Werkstück nur sehr begrenzt möglich und bedeutet zusätzlichen Bewegungsaufwand zur Vermeidung derselben im Bereich des Brennertreff und Verlust von Materiallänge durch einen entsprechend großen Absatz eben da. Einbrennerschneiden ist mit diesen Geschwindigkeiten auch möglich, der Platzbedarf für den zurückgefahrenen Ausleger ist bei den an sich engen Anlagen jedoch mehr als unerwünscht und teuer.

Die in Bild 1 zum besseren Verständnis schematisch dargestellten Schneidverfahren sind bekannt. Es handelt sich im einzelnen um:
- I.: Ein senkrechter Schneidbrenner A beginnt mit Anheizen, Anschneiden in Richtung R, das ganze Werkstück durch Schneiden zu trennen.
- II.: Zwei senkrechte Schneidbrenner A und B beginnen mit Anheizen, Anschneiden in den Richtungen R_{A} und R_{B} das ganze Werkstück zu zertrennen, wobei in der Werkstückmitte 1 Schneidbrenner z. B. B rechtzeitig zurückgezogen wird und der Schneidbrenner A den Schnitt die beiden individuellen Schneidfugen verbindend beendet.
- III.: Zwei senkrechte Schneidbrenner A₁ und A₂ beginnen durch schnelles Lochstechen L_{S} (A₁) und Anheizen (A₂), gemeinsamem Anschneiden in Richtung R das ganze Werkstück zu zertrennen, wobei der Schnitt beendet ist, wenn Schneidbrenner A₁ über die Außenkante hinaus und der Schneidbrenner A₂ in die schon vorhandene Schneidfuge von A₁ hineingeschnitten hat.
- IV.: Ein flach (z. B. 15° zur Waagerechten) angesetzter Schneidbrenner A durchtrennt das Werkstück nach Anheizen und Anschneiden in Richtung R mit extrem hoher Schneidgeschwindigkeit.
- V.: Zwei flach (z. B. 15° zur Waagerechten) angesetzte Schneidbrenner A und B beginnen mit Anheizen, Anschneiden in den Richtungen R_{A} und R_{B} das ganze Werkstück mit versetzten Schneidfugen mit extrem hoher Schneidgeschwindigkeit zu zertrennen, um eine gegenseitige Beeinflussung der Schneidstrahlen zu vermeiden. Rechtzeitig beendet etwa in Werkstückmitte der Schneidbrenner B seine Schneidarbeit, damit der Schneidbrenner A mit einem um auch seitlich versetzten Schneiden die vorhandene Schneidfuge des Schneidbrenners B erreichen und den Schnitt beenden kann.

Die nachstehend beschriebene Erfindung beansprucht durch sinnvolle Ergänzungen die Vorteile beider vorbeschriebener Verfahren bzw. der Einführung eines neuen Verfahrens, nämlich das des gleichzeitigen Mehrbrennereinsatzes, des Schneidens mit flach zur Oberfläche angeordneten Brennern und der Gasbohren genannten Erzeugung eines Startloches, ein besonders sicheres und besonders schnelles Schneiden zu ermöglichen. Dabei ist das Gasbohren ein mechanisiertes und automatisiertes Vorheizen einer als Startloch zum Brennschneiden vorgesehenen Stelle bis zur Verflüssigung des Oberflächenmaterials mit einer leistungsfähigen Heizdüse in etwa 40 mm Abstand für übliches Heizgas z. B. Erdgas, durch die dann ein schwacher Bohrstrahl aus gleicher Düse mit geringer Energie ein schwaches Verbrennen mit Erzeugung von Eisenoxydschlacke bei gleichzeitiger Wärmeabgabe bewirkt wird und diese zusammen mit flüssigem Eisen durch die kinetische Energie des Bohrstrahles aus dem Bohrloch ausgetrieben wird bzw. brodelnd überläuft. Dabei entsteht ein nur schwacher Funkenflug und wenig Schlackespritzer im Vergleich zum Lochstechen genannten Arbeiten mit starkem, hartem Bohrstrahl mit großer Energie und Geschwindigkeit. Nun kann das Bohren durch stetige Verstärkung des Bohrstrahles bei gleichzeitig stetigem Anheben der Lochbohrdüse beschleunigt werden, jedoch nur so, daß das Ausschwemmen flüssiger Schlacke und flüssigen Eisens den Bereich von etwa 20 mm über der Materialoberfläche nicht übersteigt.

Damit ist für das Gasbohren bei etwa 50 mm Materialdicke bei 800°C Materialtemperatur eine Zeit von ca. 10 Sek erforderlich. Lochstechen mit hartem Gasstrahl bei besonders starker Vorheizung z. B. mit Acetylen als Heizgas oder Eisenpulver bzw. Eisendraht als Zündhilfe läßt sich zwar innerhalb von ca. 3 Sek. durchführen, ergibt aber eine große Verspritz- und Störungsgefahr, die bei öfterem und regelmäßigem Einsatz und schlechter Zugänglichkeit zur Reinigung oder Düsenaustausch nicht zugelassen werden kann.

Damit sind folgende im Bild 2 schematisch dargestellten, erfindungsgemäßen Schneidverfahren in ihrer Art und Zusammensetzung neu und vorteilhaft. Das sind im einzelnen:
- VI.: Zwei senkrechte Schneidbrenner A₁ und A₂ beginnen durch Lochbohren L_{B} (A₁) und Anheizen (A₂), gemeinsamem, anschneidendem Eindrehen in Richtung R₁ zur Erzeugung einer flachen Schneidstellung der Schneidbrenner mit extrem hoher Schneidgeschwindigkeit das ganze Werkstück zu zertrennen, wobei der Schnitt beendet ist, wenn Schneidbrenner A₁ völlig über die Außenkante hinaus und der Schneidbrenner A₂ voll in die Schneidfuge von A₁ hineingeschnitten hat.
- VII.: Drei Schneidbrenner A₁ , A₂ und A₃ anstelle von nur 2 Schneidbrennern arbeiten mit dem gleichen Ablauf wie unter VI. beschrieben. Nur ist jedem Schneidbrenner jetzt ein Drittel der gesamten zu schneidenden Breite zugeordnet.
- VIII.: Zwei senkrechte Schneidbrenner A₁ und B₁ beginnen durch Anheizen, anschneidendem Eindrehen A₁ in Richtung R₁ bzw. Anschneiden bei senkrechter Lage B₁ in Richtung R₂ mit nachfolgendem, schnellen Schneiden B₁ in Richtung R₂ und extrem schnellen Schneiden A₁ in Richtung R₃ das Werstück zu zerteilen. Rechtzeitig wird der Schneidbrenner B₁ bei Erreichen des ihm aufrund seiner möglichen Schneidgeschwindigkeit zugeteilten Schneidstrecke zurückgezogen, wogegen der Schneidbrenner A mit seiner extrem hohen Schneidgeschwindigkeit die ihm zugedachte Strecke bis zum Einschneiden in die B-Schneidfuge schneidet und die Trennarbeit beendet.
- IX.: Drei senkrechte Schneidbrenner A, B₁ und B₂ arbeiten gemeinsam an einem Schnitt wobei der Schneidbrenner B₁ durch Lochbohren L_{B}, B₂ und A₁ durch Anheizen, Anschneiden und letzterer durch anschneidendes Eindrehen in Richtung R₁ und die anderen Richtung R₂ bzw.R₃ ein Schneiden zum Zerteilen des Werkstückes beginnen. Die Schneidbrenner B₁ und B₂ arbeiten beim Lochbohren L_{B}, Anheizen, Anschneiden und schnellen Schneiden in senkrechter Lage in Richtungen R₂ und R₃ zum Zerteilen des ihnen zugedachten Schneidstreckenteils.
Nach dem Eindrehen schneidet der Schneidbrenner A in flacher Lage mit extrem hoher Schneidgeschwindigkeit seinen Anteil bis er in der Schneidfuge von B₁ den Schnitt beendet, wenn nicht das überlappende Schneiden einer Reststrecke zwischen B₁ und B₂ mit das Schneidende bewirkt.
- X.: Drei, vier oder mehr Schneidbrenner A₁, A₂, A₃ usw. arbeiten gemeinsam an einem Schnitt, wobei die Schneidbrenner A₁ und A₂ oder mehr durch Gasbohren die Startlöcher L_{B} erzeugt und durch Anschneiden und Schneiden mit max. möglicher normaler Schneidgeschwindigkeit, das Zerteilen des Werkstückes durchführen. Der Brenner A₃ in diesem Beispiel heizt gleichzeitig dazu seine Anschneidkante vor, um dann mit den anderen Schneidbrennern gemeinsam anzuschneiden und zu schneiden.
Durch eine entsprechend hohe Zahl von Schneidbrennern kann die gesamte Schneidzeit auf gewünschte Werte verringert werden.
Die Brenner können alles zusammen oder in Gruppen in Schneidrichtungen von beiden Seiten her eingesetzt werden.

Dazu wird beispielsweise nach Ausführung Nr. VI. das schnelle Lochstechen in 2 - 3 Sekunden mit starkem oder schnell zunehmendem Schneidsauerstoffstrahl (der das Zurückspritzen bewirkt) durch ein zeitaufwendiges (ca. 15 Sek) Lochbohren ersetzt, bei dem ein schwach eingestellter Schneidsauerstoffstrahl das flüssige Eisen bzw. die flüssige Schlacke aus der Bohrstelle brodelnd wie bei einem Überkochen herausdrängt, bis ein Loch erzeugt ist. Jetzt kann ein sicheres Schneiden auch im Material beginnen. Um diesen Zeitverlust auszugleichen, können jetzt mehr als ein am Werkstückrand beginnender Schneidbrenner alle an einem niedrig bauenden Ausleger eingesetzt werden. Durch ein Lochbohren oder mit dem Anheizen der meist kühleren Stranghaube mit einem außen ansetzenden Schneidbrenner werden etwa insgesamt 20 Sekunden zur Schneidvorbereitung gebraucht. Für 2 Schneidbrenner, d.h. einer bohrt sein Startloch, bleiben unter den Voraussetzungen wie im obigen Beispiel für jeden ebenfalls etwa 800 mm zum Anschneiden und Schneiden. Das anschneidende Eindrehen der beiden Schneidbrenner dauert bei zunehmender Drehgeschwindigkeit etwa 25 Sekunden und damit sind bei ca. 25 mm Düsenabstand schon ca. 373 mm geschnitten. Es verbleiben je Brenner ca. 286 mm (an der Oberfläche gemessen), die jetzt mit ca. 1,5 m/Min., das entspricht etwa 11,5 Sek, mit sicherem Ausschneiden geschnitten werden. Die gesamte Schneidzeit beträgt jetzt 20 + 25 + 11 = 56 Sek. Das entspricht nun einem Mitlaufweg von nur noch 5,6 m, mit dem entsprechenden Rücklauf wird nun eine kürzeste Stücklänge von 7,7 m möglich.

Obige Zeit- und Weg- bzw. Stücklängen-Überschlagsrechnung aufgrund geeigneter Annahmen sind durch geeignete Konstruktion und Brennerwahl sicher noch zu verbessern und zeigen aber jetzt schon den Vorteil des Verfahrens, wenn man eine Ausführung gemäß Nr. VI. in Bild 2 betrachtet:
Mit einem Ausleger (nur 1 Antrieb, Arbeiten durch einen Schlitz der Isolationshaube), mit nur anteiligem Schneidweg (z. B. 2 Brenner halbieren den Schneidweg) und entsprechend kurzem Auslegerweg und mit ruhigem und sicherem Bohren des jeweiligen Startloches kann dieses Brennschneidverfahren beim schnellen Dünnbrammengießen schnell und sicher kurze Stücklängen in kurzem Schneidbereich bei nur geringem Aufwand für die Schneidanlage abtrennen. Natürlich läßt sich dieses Verfahren auch an ruhig liegenden und anders bewegten Werkstücken aus Stahl vorteilhaft einsetzen, zum Beispiel mit Plasmaschneiden an Bunt- und Edelmetallen.

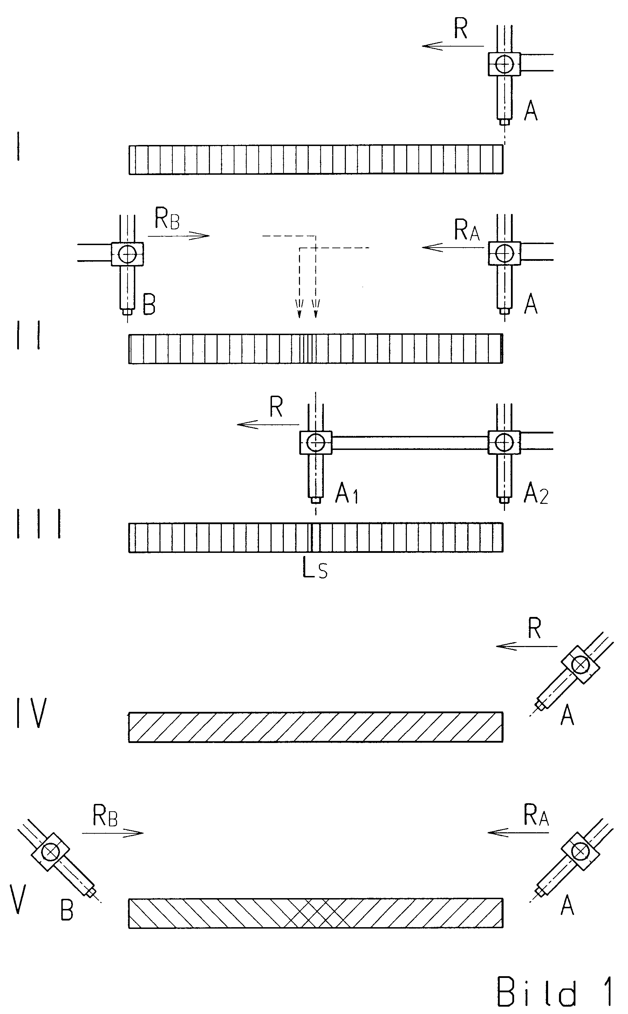

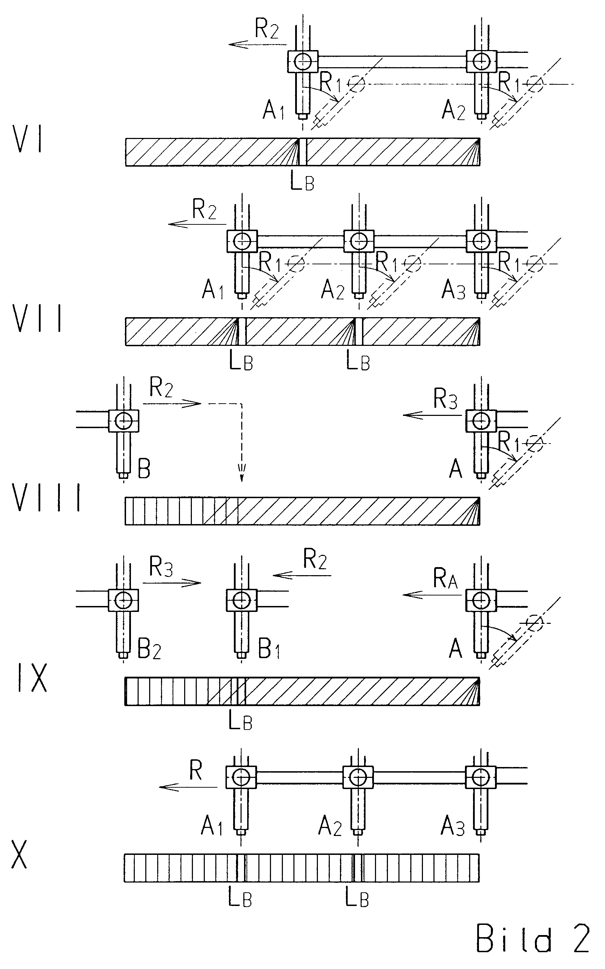

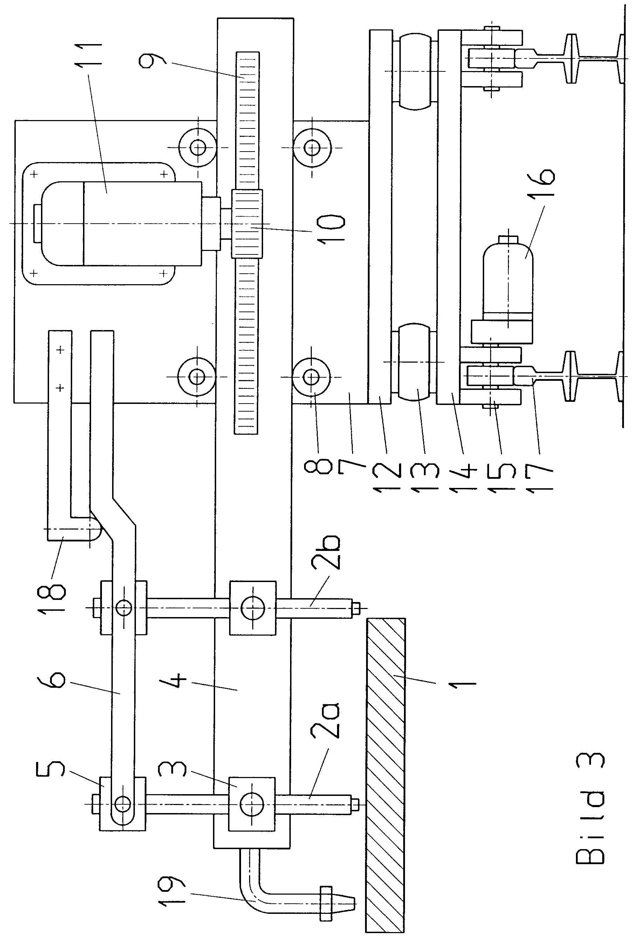

Zum besseren Verständnis wird der prinzipielle Aufbau einer Schneidmaschine für das beanspruchte Verfahren anhand der Abb. 3 beschrieben.

Über einer schnell in Bildebene bewegten Dünnbramme 1 sind zwei Schneidbrenner (2a, 2b) mittels Drehlagern 3 an einem Ausleger 4 angebracht. Sie sind mit jeweiligem Zuggelenk 5 mit einer Zugstange 6 verbunden.
Der Ausleger 4 wird an einem Auslegerbock 7 in Führungsrollen 8 verfahrbar gehalten. Mittels einer Zahnstange 9 wird der Ausleger 4 durch ein Zahnrad 10 von einem Schneidantrieb 11 für ein drehendes Vorwärtsfahren (sehr langsam), ein anschneidendes Vorwärtsfahren (langsam), ein schneidendes Verfahren und ein schnelles Zurückziehen quer zur Dünnbramme 1 bewegt. Damit diese und die Schneidbrenner 2a, 2b für einen rechtwinkligen Schnitt bei Gießbewegung synchron laufen, sitzt der Auslegerbock 7 auf einer Grundplatte 12, die ihrerseits auf Hubelementen 13 sitzt, mit denen eine Höheneinstellung der gesamten schneidenden Einrichtung über der Dünnbramme 1 vorgenommen werden kann. Die Hubelemente sitzen auf einem Wagen, dessen Laufräder von einem Fahrantrieb 16 für den Synchronlauf und den Rücklauf angetrieben auf einer Laufbahn 17 parallel zum Strang verfahren.

Um mit einer langsamen Vorwärtsbewegung des Auslegers 4 eine entsprechende Drehbewegung der Schneidbrenner 2a, 2b durchzuführen, ist ein der abgekröpften Form der Zugstange 6 entsprechender Zughaken 18 am Auslegerbock angebracht. Da ab einer gewissen Stellung des Schneidbrenners 2a die Schneidschlacke zu weit von unterhalb der Dünnbramme 1 nach draußen gespritzt wird, kann mittels einer am Kopf des Auslegers 4 angebrachten Spritzwasserdüse ein Abspritzen und Granulierung der Schneidschlacke neben dem Strang ohne Abkühlung desselben erfolgen.

Wie erwähnt ist dies nur eine grundlegende Darstellung, deren Ergänzung mit verbessernden Konstruktionselementen und anderen Einrichtungen Aufgabe des Konstrukteurs ist.

Zum Beispiel kann eine Ausführung nach Bild 2 Nr. VII. bei besonders breiten Materialien von Vorteil sein, während die Nr. VIII. im Vergleich zur vorbeschriebenen Ausführung Nr. VI. bei schmaleren Materialien wegen wegfallender Lochbohr- und Eindrehzeiten günstiger wäre. Unter vorbeschriebenen Umständen bei angegebenen Daten sind dabei Gesamtschneidzeiten von 52 Sek. mit einem Mitlaufweg von 5,2 m und einer min. Stücklänge von 7,1 m möglich, und das ohne den schwierigeren Lochbohr- und Eindrehvorgang.

Es ist daher bei entsprechendem Produktbereich eine der Ausführung VI. bis IX. oder ähnlich gemäß Bild 2 nach sorgfältiger Überprüfung auszuwählen.

### Legende zu Bild 3

- 1: Dünnbramme
- 2: Schneidbrenner
- 3: Drehlager
- 4: Ausleger
- 5: Zuggelenk
- 6: Zugstange
- 7: Auslegerbock
- 8: Führungsrolle
- 9: Zahnstange
- 10: Zahnrad
- 11: Schneidantrieb
- 12: Grundplatte
- 13: Hubelement
- 14: Wagen
- 15: Laufrad
- 16: Fahrantrieb
- 17: Laufbahn
- 18: Zughaken
- 19: Spritzwasserdüse

## Patentansprüche

1. Verfahren zum schnellen Trennen von Dünnbrammen, Platinen und Blechen, insbesondere Dünnbrammensträngen aus Stahl, dadurch gekennzeichnet, daß durch den gleichzeitigen Einsatz von 2 und mehr Schneidbrennern, von denen entweder mindestens 1 mit vorteilhafter flacher Schräglage von bis zu 10° zur Waagerechten von einer angeheizten Materialkante oder aus einem aus senkrechter oder schwach zur Senkrechten geneigten Lage ins Material gasgebohrten oder gasgeschmolzenen Startloch durch Vorwärtsdrehen mit zunehmender Anschneidgeschwindigkeit bis zu einer in flacher Schräglage besonders hohen Schneidgeschwindigkeit oder mindestens 1 einfach in senkrechter Lage das Schneiden eines Teils der Materialbreite beginnt. Ein zweiter oder mehr nur in mehr oder weniger senkrechter Lage eingesetzter Schneidbrenner schneiden gleichzeitig und allein von der anderen angeheizten Materialkante aus oder von dieser und aus ins Material gasgebohrten oder gasgeschmolzenen Startlöchern gemeinsam mit herkömmlicher senkrechter Lage und Schneidgeschwindigkeit aufeinander oder auf den oder die Schneidbrenner in flacher Schräglage zu, bis einer aller dieser Schneidbrenner den gesamten Trennschnitt beendet hat. Spritzwasserdüsen begrenzen die eventuell durch die starke Schräglage von Schneidbrennern weit über die Materialbreite reichenden mit Schlackespritzern und Funken austretenden Schneidstrahlen.

2. Verfahren zum schnellen Trennen von Dünnbrammen, Platinen und Blechen, insbesondere Dünnbrammensträngen aus Stahl nach Anspruch 1, dadurch gekennzeichnet, daß ein sicheres Gasbohren eines Startloches mittels eines Bohrstrahles z.B. aus Schneidsauerstoff nach ausreichend guter Vorheizung auf materialbedingte Zündtemperatur vorgenommen wird, bei dem der Bohrstrahl nur so schwach oder auch zunehmend stärker wirkt, sodaß mit einem fast funkenflugfreien Ausbrodeln des Materiales an vorgesehener Stelle ein Startloch entsteht, wozu bei geringem Lochbohr-Düsenabstand zum Vorheizen des Lochbohrens mit zunehmendem Sauerstoffstrahldruck auch die Düse selbst stetig angehoben wird.

3. Verfahren zum schnellen Trennen von Dünnbrammen, Platinen und Blechen, insbesondere Dünnbrammensträngen aus Stahl nach einem der Ansprüche 1 und 2, dadurch gekennzeichnet, daß mittels einer leichten Neigung des Brenners zur Senkrechten beim Bohren der brodelnde Ausfluß des flüssigen Eisenschlacke/-Eisen-Gemisches in eine gewünschte Richtung zum Beispiel Schneidrichtung gelenkt wird.

4. Verfahren zum schnellen Trennen von Dünnbrammen, Platinen und Blechen, insbesondere Dünnbrammensträngen aus Stahl nach einem der Ansprüche 1 bis 3, dadurch gekennzeichnet, daß mit einer der verfügbaren Zeit entsprechenden Anzahl von Schneidbrennern in senkrechter Lage durch das Gasbohren von entsprechenden Startlöchern ein gemeinsames oder gruppenweises Anschneiden und Schneiden mit herkömmlicher Schneidgeschwindigkeit eine kürzeste Gesamtzeit für den gesamten Trennvorgang benötigt wird.

5. Verfahren zum schnellen Trennen von Dünnbrammen, Platinen und Blechen, insbesondere Dünnbrammensträngen aus Stahl nach einem der Ansprüche 1 bis 4, dadurch gekennzeichnet, daß durch ein Drehen des Schneidbrenners ein gleichzeitiges Schneiden und eine Einstellung in eine Schräglage zum schnellen Schneiden mit flachem Winkel zwischen Brenner und Werkstück vorgenommen wird.

6. Verfahren zum schnellen Trennen von Dünnbrammen, Platinen und Blechen, insbesondere Dünnbrammensträngen aus Stahl nach einem der Ansprüche 1 bis 5, dadurch gekennzeichnet, daß einer drehenden Schneidbewegung eine zunehmende mögliche Schneidgeschwindigkeit überlappend oder anschließend zugeordnet wird.

7. Verfahren zum schnellen Trennen von Dünnbrammen, Platinen und Blechen, insbesondere Dünnbrammensträngen aus Stahl nach einem der Ansprüche 1 bis 6, dadurch gekennzeichnet, daß der senkrecht oder flach schneidende Schneidbrenner aufgeteilt ist in einen vorheizenden Teil zum Bohren, einen sauerstoffstrahlführenden Teil zum Bohren, einen heizenden Teil zum Schneiden und einen sauerstoffstrahlführenden Teil zum Schneiden, und daß diese Teile in baumäßig vorteilhafter Weise zu einem oder zwei Geräten kombiniert sind.

8. Verfahren zum schnellen Trennen von Dünnbrammen, Platinen und Blechen, insbesondere Dünnbrammensträngen aus Stahl nach einem der Ansprüche 1 bis 7, dadurch gekennzeichnet, daß der bei flacher Schräglage des Brenners unter dem Werkstück in waagerechter Richtung zu weit reichende, austretende Schlacken- und Funkenflug durch Spritzwasser, das aus vor dem vordersten Brenner angebrachten Spritzwasserdüsen ab dem gewünschten Zeitpunkt austritt, begrenzt, abgelöscht, granuliert und weggeschwemmt wird.

9. Verfahren zum schnellen Trennen von Dünnbrammen, Platinen und Blechen, insbesondere Dünnbrammensträngen aus Stahl nach einem der Ansprüche 1 bis 8, dadurch gekennzeichnet, daß mehrere heizende Lochbohrdüsen hintereinander in Schneidrichtung an gemeinsamer Brennerleiste angeordnet mit Gasstrahl Startlöcher bohren, worauf unverzüglich eine zweite gemeinsame Brennerleiste mit Schneiddüsen an ihre Stelle gebracht werden, um die das Werkstück zertrennenden Anschneid- bzw. Schneidvorgänge zu beginnen.
